# EUROPÄISCHE PATENTSCHRIFT

(11) **EP 2 923 682 B1**
(45) Veröffentlichungstag und Bekanntmachung des Hinweises auf die Patenterteilung: **01.05.2019**
(21) Anmeldenummer: 15160645.6
(22) Anmeldetag: 24.03.2015
(51) Int. Cl.: A61G 17/08

(54) **Bepflanzbare Urne**
Plantable urn
Urne pouvant recevoir des plantations

(30) Priorität: 24.03.2014 AT 2072014
(43) Veröffentlichungstag der Anmeldung: 30.09.2015
(73) Patentinhaber: Steiner, Martin, 106 Wien (AT)
(72) Erfinder: Steiner, Martin, 106 Wien (AT)
(74) Vertreter: LS-MP von Puttkamer Berngruber Loth Spuhler

(56) Entgegenhaltungen:
- WO-A1-2012/139579
- DE-A1-102008 004 490
- US-A1- 2008 083 102

## Beschreibung

Die Erfindung betrifft eine bepflanzbare Urne, bei der Asche, insbesondere Kremationsasche, als eine Nährstoffgrundlage für eine Pflanze verfügbar gemacht wird.

Die liebevolle Pflege eines Grabes - die Dekoration mit Blumen und Pflanzen - gehört seit Bestehen der Erdbestattung zu den grundlegenden Ritualen des Gedenkens. Allerdings entscheiden sich heutzutage immer mehr Menschen für eine Feuerbestattung (Kremation). So sind in deutschen Großstädten heute mehr als die Hälfte aller Beisetzungen Feuerbestattungen. Die weltweite starke Zunahme der Feuerbestattungen in den letzten Jahren hat ihren Grund zum einen in den deutlich höheren Kosten für eine Erdgrabstelle im Vergleich zum Urnengrab. Andererseits spielen auch ästhetische und hygienische Überlegungen eine Rolle. So stellt ein verwesender Körper für Boden und Grundwasser eine ernsthafte Belastung dar. Auch Särge sind in der Regel lackiert und mit Kunststoffen in der Polsterung versehen - ein ökologisches Problem, das erst in den letzten Jahren ins Bewusstsein der Friedhofsverwaltungen gedrungen ist. Auch empfinden manche Menschen die Verbrennung "als sauberer" im Gegensatz zur Verwesung des (eigenen)Leichnams im Boden, etwa im Falle, dass der Verstorbene eine ansteckende Krankheit hatte.

In Österreich geht bereits mehr als einem Drittel der Bestattungen eine Kremation voraus - Tendenz stark steigend. In Deutschland wächst die Rate der Feuerbestattungen pro Jahr jeweils etwa um ein Prozent.

Die Frage der Kremation stellt sich dabei nicht nur bei Versterben eines Familienangehörigen, sondern auch beim Tod eines Haustieres. Auch nach Versterben eines Haustieres ist es inzwischen üblich, dieses einer Feuerbestattung zuzuführen.

Allerdings fällt bei der Feuerbestattung das Ritual der Grabpflege - und damit eine wichtige Möglichkeit der Trauerbewältigung und Erinnerungspflege - meist weg: Die Urne bzw. Urnenkapsel mit den Kremationsüberresten des Verstorbenen erhält nur selten eine eigene Grabstelle. So werden Urnenkapseln üblicherweise in sogenannte Überurnen oder Schmuckurnen integriert und in Urnenwandnischen eingemauert oder in Erdurnengräbern bestattet. Weil dabei meist keine Möglichkeit der Bepflanzung besteht, beschränkt sich das Gedenkritual oft auf die Hinterlegung von Schnittblumen. Die tröstende Symbolik des Wachsens und Blühens - wie bei der Pflege von Erdgräbern - fällt hier komplett weg.

Aus diesem Grund wünschen sich viele Hinterbliebene, dass man die Urne bzw. Urnenkapsel nicht auf einem öffentlichen Friedhof, sondern zu Hause aufbewahrt. Dies rührt einerseits aus dem Willen, die Urne und Asche von geliebten Verstorbenen auch nach dem Tod noch bei sich haben zu wollen oder sie an einem Ort begraben zu können, der eine persönliche Bedeutung hat. Auf der anderen Seite dürften auch finanzielle Gründe ausschlaggebend sein, wenn man bedenkt, dass ein Urnengrab mit einer 20-jährigen Liegezeit ohne weiteres mehrere Hundert Euro kosten kann.

Bestattungsunternehmen beobachten auch einen weiteren Trend der für die Feuerbestattung und für die Heimaufstellung von Urnen spricht: Durch die zunehmende Globalisierung sind Familien heute oft über viele Länder oder gar Kontinente verteilt - die Kremation erlaubt die Aufteilung der Asche auf mehrere Hinterbliebene.

Um den Nachteil einer fehlenden Grabpflege bei Feuerbestattungen (Kremation) zu beseitigen, ist im Stand der Technik durch die US 2008/0083102 A1 vorgeschlagen worden, Urnenkapseln bzw. Aschekapseln in den Stamm eines Baumes oder einer anderen Pflanze (beispielsweise einem Kaktus, einer Palme) einzubringen, so dass diese im Laufe der Zeit umschlossen wird und mit der Pflanze verwächst. Auf diese Weise "verbindet" sich die Urnen- oder Aschekapsel des Verstorbenen mit der Pflanze. Der Nachteil dieser Erfindung besteht jedoch darin, dass eine ausreichend große Pflanze benötigt wird und dass sowohl die Urnen- oder Aschekapsel als auch die Asche selbst ein Fremdkörper in der Pflanze bleibt.

Im Stand der Technik ist ferner die US 5,815,897 bekannt. Diese betrifft einen Übertopf für einen Pflanztopf, der mit einer Urne z. B. mittels eines Schraubverschlusses verbunden werden kann. Allerdings mangelt es auch bei dieser Erfindung daran, dass es nicht zu einer direkten Verbindung oder einer Wirkverbindung zwischen der Urne bzw. der Aschekapsel und der Pflanze kommt. Das Verschrauben der Urne mit dem Übertopf ist lediglich dekorativ.

Hinterbliebene wünschen sich aber regelmäßig nicht nur, dass eine Urne mit der Kremationsasche zu dekorativen Zwecken in einer Pflanze oder aber neben einer Pflanze verwahrt wird. Tatsächlich ist es auch der Wunsch von Hinterbliebenen, dass die Kremationsasche im Rahmen einer aktiven Trauerbewältigung eine stoffliche Verbindung mit einer Pflanze eingeht und somit der Verstorbene in der Pflanze "weiterlebt" bzw. die wachsende und gedeihende Pflanze das Weiterleben des Verstorbenen versinnbildlicht. Die Beobachtung des Wachstums einer solchen Pflanze hält auch die Erinnerungen der Hinterbliebenen an den Verstorbenen "am Leben".

Naturwissenschaftlich betrachtet führt dieses Wachstum aus der Asche eines Verstorbenen den Stoffkreislauf des Lebens vor Augen. Theologisch versinnbildlicht es das Bild von "Asche zu Asche, Staub zu Staub" oder das Prinzip der Wiedergeburt. Der stoffliche Kreislauf allen Lebens findet sich in jeder Weltreligion wieder. Er eröffnet eine Vielzahl von tröstlichen Metaphern für die nötige Trauerbewältigung.

Aus dem Stand der Technik bekannt ist in diesem Zusammenhang, dass Asche, insbesondere Kremationsasche, einen hohen Anteil an Stoffen aufweist, die als Nährstoffe für Pflanzen verwertbar sind. Insbesondere weist Kremationsasche einen besonders hohen Anteil an Kalziumphosphat auf und eignet sich folglich als Pflanzendünger bzw. als Nährstoffzusatz für Pflanzen. So offenbart beispielsweise die US 2008/013 4575 A1 die Verwendung von Kremationsasche zur Pflanzendüngung. Dabei wird die Kremationsasche jedoch beispielsweise mit Pflanzenerde vermengt.

Die WO2012/139579 offenbart eine Urne und ein Verbindungselement aus mehreren Gliedern, durch das Flüssigkeit von oben zur Urne bzw. aus der bestatteten Urne oder aus diese umgebendem Erdreich Flüssigkeit bzw. Nährstoffe zu einer Pflanze transportiert werden. Das untere, der Urne zugewandte Ende des Verbindungselements soll vorzugsweise mit der Zeit zerfallen oder sich zersetzen. In das obere Ende des Verbindungselements kann eine Pflanze gepflanzt werden. Die offenbarte Urne eignet sich jedoch nicht zur Heimaufstellung und offenbart insbesondere keine Nährstoffübertragung über ein Dochtelement.

Es ist daher die Aufgabe der vorliegenden Erfindung, eine dekorative und pietätvolle Urne bereitzustellen, in der Asche, insbesondere Kremationsasche von Menschen oder Tieren, verwahrt wird und mittels derer Nährstoffe aus dieser Asche einer Pflanze zugeführt werden, ohne dass es zu einer Vermengung von Asche und Bepflanzungsgrundlage (Erde, Granulat, etc.) kommt. Auch bei der Bepflanzung bzw. der Pflanzenpflege kann es zu keinem Kontakt mit der feststofflichen Asche kommen. Die Pflanze erhält Nährstoffe aus der in der Urne befindlichen Asche. Durch dieses Zusammenwirken wird der stoffliche Kreislauf des Lebens nicht behindert, wie in einer herkömmlichen Aschekapsel, sondern sogar gefördert.

Erfindungsgemäß wird hierzu eine Urne bereitgestellt, die wenigsten aus zwei Bereichen besteht.

Die Urne kann zylindrisch, quaderförmig oder kugelförmig sein, aber auch jede andere denkbare geometrische Grundform aufweisen.

Es kann auch der Wunsch bestehen, dass eine einzelne Urne die Asche mehrerer verstorbener Menschen oder Tiere aufnimmt. Aus Pietätsgründen soll eine solche Bauform aber ermöglichen, dass sich die Asche mehrerer Verstorbener nicht miteinander vermengt.

Die Urne kann beispielsweise aus Keramik, Ton, Sandstein, Glas, Porzellan, Kunststoff, Corian oder aus jedem anderen denkbaren Stoff bestehen.

Die erfindungsgemäße Urne weist wenigstens zwei voneinander getrennte Bereiche auf.

Wenigstens ein erster Bereich der Urne dient der Aufnahme von Asche, insbesondere Kremationsasche. Erfindungsgemäß kann der erste Bereich der Urne auch aus mehreren räumlich getrennten Teilbereichen bestehen, so dass der erste Bereich der Aufnahme der Asche wenigstens einer oder mehrerer Personen oder Tiere dienen kann.

Wenigstens ein zweiter Bereich der Urne kann eine Bepflanzungsgrundlage aufnehmen. Bepflanzungsgrundlage kann jede Substanz sein, die geeignet ist eine Lebensgrundlage für eine Pflanze zu bilden. Die Bepflanzungsgrundlage kann daher beispielsweis aus Sand, Erde, Granulat, Wasser oder jedem anderen für Pflanzenwachstum geeigneten Material bestehen.

Erfindungsgemäß werden Nährstoffe aus der Kremationsasche in wenigstens einem ersten Bereich der Urne in wenigstens einen zweiten Bereich der Urne mittels wenigstens eines Nährstoffübertragungselements transportiert.

Dieses wenigstens eine Nährstoffübertragungselement kann jede beliebige Form aufweisen, beispielsweise scheibenförmig, zylinderförmig, kugelförmig, kegelförmig ausgestaltet sein.

Das Nährstoffübertragungselement kann aus jedem porösen Material bestehen, das als Membran wirken kann. Das Nährstoffübertragungselement kann beispielsweise aus Ton, Keramik, Sandstein, Glas oder Kunststoff ausgestaltet sein. Das Nährstoffübertragungselement kann so gestaltet sein, dass es die wenigstens zwei getrennten Bereiche der Urne so separiert, dass die Asche nicht mit der Bepflanzungsgrundlage in Berührung kommt bzw. nicht mit dieser vermengt werden kann.

Das Nährstoffübertragungselement ist auch wenigstens ein Dochtelement. Das Nährstoffübertragungselement kann zusätzlich auch wenigstens ein Bewässerungselement sein.

Das Dochtelement ist so ausgestaltet, dass es sich in den ersten Bereich der Urne erstreckt und in physischem Kontakt mit der dort eingebrachten Kremationsasche steht.

Das Dochtelement kann jede beliebige Form aufweisen. Vorzugsweise ist das Dochtelement zylinderförmig und hohl ausgestaltet, wobei der Zylinder vorzugsweise zu einer Grundfläche offen ist. So lässt sich das Dochtelement mit dem offenen Ende des Zylinders einfacher in die Asche drücken und hat zugleich eine größere Fläche für den Nährstofftransport. Das Dochtelement kann so ausgestaltet sein, dass es mit wenigstens einem weiteren Nährstoffübertragungselement fest verbindbar ist.

Das Bewässerungselement stellt eine Verbindung zwischen dem Bereich außerhalb der Urne und dem ersten Bereich der Urne dar, mittels dessen (Gieß-)wasser für eine Pflanze wenigstens einem ersten Bereich der Urne zuführbar ist.

Auch das Bewässerungselement kann so ausgestaltet sein, dass es mit wenigstens einem weiteren Nährstoffübertragungselement fest verbindbar ist.

Es besteht auch die Möglichkeit, eine Urne aus einem porösen Material, das als Membran wirken kann, zur Verfügung zu stellen. In diesem Fall wirkt die gesamte Urne als Nährstoffübertragungselement.

Bei einer Ausführungsform der Erfindung besteht die Urne aus zwei Bereichen. In einen ersten Bereich der Urne wird Asche eingebracht. In einen zweiten Bereich der Urne werden die Bepflanzungsgrundlage (z. B. Erde) und eine Pflanze (z. B. Blume) eingebracht. Die beiden Bereiche werden durch das Nährstoffübertragungselement voneinander getrennt.

Wird die Pflanze gegossen, kann Wasser bzw. Feuchtigkeit, beispielsweise durch Schwerkraft oder auf sonstigem Wege, durch das Nährstoffübertragungselement oder das Dochtelement aus dem zweiten Bereich langsam in den ersten Bereich zur Asche transportiert werden. Die Feuchtigkeit durchdringt die Asche und löst die darin befindlichen Nährstoffe.

Trocknet die Bepflanzungsgrundlage, sorgen Osmose und Kapillarwirkung dafür, dass die im ersten Bereich der Urne noch vorhandene Feuchtigkeit über das Nährstoffübertragungselement in den zweiten Bereich gelangt. Dabei werden zugleich in der Asche enthaltene Nährstoffe durch das Nährstoffübertragungselement hindurch in die Bepflanzungsgrundlage in den zweiten Bereich der Urne transportiert, wo sie von einer Pflanze aufgenommen werden können.

Da das Nährstoffübertragungselement als Membran wirkt, kann durch die Auswahl einer spezifischen Porengröße des Materials bestimmt werden, welche und in welcher Menge Nährstoffe bzw. Moleküle aus der Asche in die Bepflanzungsgrundlage gelangen sollen und welche Moleküle in der Asche verbleiben. Die Poren sind erfindungsgemäß so bemessen, dass sie groß genug sind, um die wichtigen Nährstoffe von der Aschekammer in die Pflanzerde zu transportieren, aber klein genug, um zu verhindern, dass unerwünschte Stoffe - etwa Bakterien - aus der Pflanzenerde im zweiten Bereich in den ersten Bereich gelangen.

Durch die Auswahl einer bestimmten Größe und der möglichen Anzahl von Nährstoffübertragungselementen und der Porengröße des Nährstoffübertragungselements und des Dochtelements kann zudem bestimmt werden, welche Menge von Nährstoffen in die Bepflanzungsgrundlage transportiert wird.

Vorzugsweise wird für Pflanzenarten, die nur sehr wenig Nährstoffe benötigen, ein Material mit geringer Porengröße für das Nährstoffübertragungselement auswählt, so dass nur wenige Nährstoffe aus der Asche transportiert werden können. Zudem ist bekannt, dass je mehr Nährstoffe transportiert werden, desto höher der PH-Wert in der Bepflanzungsgrundlage wird. Durch die Auswahl der Porengröße und der Größe des Nährstoffübertragungselements kann daher eine Überdüngung oder eine Veränderung des PH-Wertes verhindert werden. Beispielsweise brauchen Orchideen einen niedrigen PH-Wert, so dass das Nährstoffübertragungselement für solche Pflanzen eher klein sein sollte.

Bei der erfindungsgemäßen Urne liegt die Porengröße des Nährstoffübertragungselements im Mikrometerbereich. Damit kann die feststoffliche Asche selbst nicht mit der Bepflanzungsgrundlage in Kontakt kommen. Die pietätsvolle Trennung von Asche und Bepflanzungsgrundlage bleibt stets bewahrt.

Erfindungsgemäß kann die Asche unmittelbar im Krematorium in wenigstens einen ersten Bereich der Urne eingebracht werden.

Das Nährstoffübertragungselement kann zudem entweder fest mit der Urne verbunden sein oder erst nachträglich in die Urne eingebracht werden.

Zudem ist es möglich, die Asche in einem gesonderten Aschebehältnis aufzunehmen, das in den ersten Bereich der Urne eingebracht wird. Hierdurch kann gewährleistet werden, dass die Asche bei einer Beschädigung oder einem Zerbrechen der Urne in dem Aschebehältnis verbleibt und nicht verstreut wird.

Es ist auch denkbar, die Urne mit einem abnehmbaren Glassturz zu versehen. Auf diese Weise wird die Urne zu einem Pflanzenterrarium. Durch Verdunstung und Kondensation im Inneren zirkuliert die Feuchtigkeit dann im Gefäß. Diese Bauform minimiert den Pflegeaufwand und führt noch unmittelbarer vor Augen, wie die Kremationsasche einen vitalen Teil eines Ökosystems bilden kann.

Denkbar ist es auch, dass sich wenigstens ein erster Bereich der Urne, der der Aufnahme der Asche dient, innerhalb des Nährstoffübertragungselements befindet. Bei dieser Ausführungsform wird der erste Bereich durch das Nährstoffübertragungselement begrenzt.

Eine weitere vorteilhafte Ausführungsform der erfindungsgemäßen Urne sieht vor, dass Gießwasser für eine Bepflanzung direkt in den ersten Bereich der Urne eingebracht wird. Dort reichert sich das Wasser mit Nährstoffen an, die über das Nährstoffübertragungselement in die Bepflanzungsgrundlage im zweiten Bereich der Urne transportiert werden.

Die Erfindung soll nachstehend anhand verschiedener Ausführungsbeispiele sowie unter Zuhilfenahme von Figuren näher erläutert werden.

Hierbei zeigen:
- Figur 1: bepflanzbare Urne
- Figur 2a: bepflanzbare Urne mit einem scheibenförmigen Nährstoffübertragungselement
- Figur 2b: abgewandelte Ausführungsform gemäß Figur 2a
- Figur 3a: bepflanzbare Urne mit einem zylinderförmigen Nährstoffübertragungselement
- Figur 3b: Außenansicht einer Urne gemäß Figur 3a
- Figur 4a: bepflanzbare Urne mit einem Nährstoffübertragungselement und einem Dochtelement
- Figur 4b: Querschnitt einer Urne gemäß Figur 4a
- Figur 4c: abgewandelte Ausführungsform gemäß Figur 4a
- Figur 5a: bepflanzbare Urne mit einem Dochtelement
- Figur 5b: Außenansicht einer Urne gemäß Figur 5a
- Figur 5c: Außenansicht einer Urne gemäß Figur 5a mit eingesetztem Dochtelement
- Figur 5d: Querschnitt einer Urne gemäß Figur 5a mit eingesetztem Dochtelement
- Figur 6a: bepflanzbare Urne mit einem unbefüllten Aschebehältnis im ersten Bereich
- Figur 6b: Querschnitt einer Urne gemäß Figur 6a mit einem befüllten Aschebehältnis
- Figur 6c: Querschnitt einer Urne gemäß Figur 6a mit einem befüllten Aschebehältnis und eingesetztem Dochtelement
- Figur 7a: bepflanzbare Urne mit vier Dochtelementen
- Figur 7b: bepflanzbare Urne mit mehreren Dochtelementen
- Figur 8: bepflanzbare Urne, bei der der erste Bereich aus mehreren Teilbereichen besteht
- Figur 9a: Querschnitt einer bepflanzbaren Urne, bei der der erste Bereich aus zwei Teilbereichen besteht, die jeweils ein Dochtelement aufweisen
- Figur 9b: Querschnitt einer bepflanzbaren Urne, bei der der erste Bereich aus sechs Teilbereichen besteht, die jeweils ein Dochtelement aufweisen
- Figur 9c: Draufsicht einer bepflanzbaren Urne gemäß Figur 9a
- Figur 9d: Draufsicht einer bepflanzbaren Urne gemäß Figur 9b
- Figur 10a: bepflanzbare Urne mit einem Nährstoffübertragungselement, das den ersten Bereich der Urne bildet und begrenzt
- Figur 10b: bepflanzbare Urne mit einem eingesetzten Nährstoffübertragungselement gemäß Figur 10a
- Figur 10c: Querschnitt einer Urne gemäß Figur 10b
- Figur 11a: besondere Ausführungsform der erfindungsgemäßen Urne, bei der der erste Bereich der Urne von der Urnengrundfläche aus mit Asche befüllbar ist
- Figur 11b: Draufsicht einer Urne gemäß Figur 11a
- Figur 12a: bepflanzbare Urne gemäß Figur 5a, mit einem scheibenförmigen Nährstoffübertragungselement mit einer Öffnung mit einer Begrenzungsfläche
- Figur 12b: Außenansicht einer Urne gemäß Figur 12a
- Figur 13a: bepflanzbare Urne, bei der wenigstens ein erster Bereich durch einen Hohlraum zwischen der Außenwand und dem Innenraum der Urne gebildet wird
- Figur 13b: Draufsicht der Urne gemäß Figur 13a

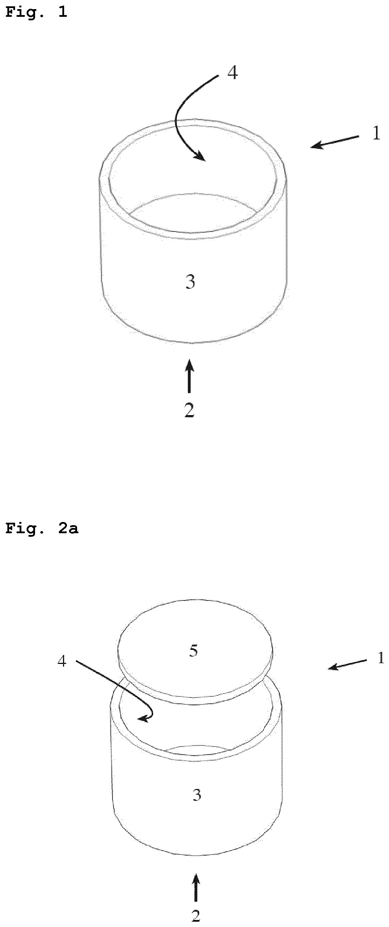

Figur 1 zeigt eine erfindungsgemäße Urne 1 mit einer zylindrischen Grundform. Die erfindungsgemäße Urne ist jedoch nicht auf diese Grundform beschränkt, sondern kann jede andere denkbare geometrische Grundform aufweisen. Die bepflanzbare Urne 1 weist eine Urnengrundfläche 2 und eine Außenwand 3 auf.

Die Urne 1 weist einen Innenraum 4 auf, der in der hier dargestellten Ausführungsform durch die Außenwand 3 und die Grundfläche 2 begrenzt wird. In Abhängigkeit von der geometrischen Grundform der Urne kann der Innenraum 4 auch nur durch die Außenwand 3 begrenzt werden, so beispielsweise bei einer kugelförmigen Urne. Denkbar ist es ebenfalls, dass der Innenraum 4 durch ein Nährstoffübertragungselement 5 begrenzt wird.

Der Innenraum der Urne 4 weist wenigstens einen ersten Bereich 7 und einem zweiten Bereich 8 auf. Der erste Bereich 7 dient der Aufnahme von Asche, insbesondere Kremationsasche. Der zweite Bereich 8 dient der Aufnahme eines Bepflanzungsmittels und einer Pflanze.

Figur 2a zeigt eine Urne 1 und ein Nährstoffübertragungselement 5. Das Nährstoffübertragungselement 5 ist bei der in Figur 2a dargestellten Ausführungsform scheibenförmig ausgebildet. Das Nährstoffübertragungselement 5 weist vorteilhafter Weise einen Durchmesser auf, der dem Durchmesser des Innenraums 4 der Urne 1 im Wesentlichen entspricht. Auf diese Weise wird gewährleistet, dass das Nährstoffübertragungselement 5 so in die Urne 1 eingebracht werden kann, dass es mit der Innenseite der Außenwand 3 bündig abschließt und so zwei Bereiche in dem Innenraum 4 der Urne 1 gebildet werden. Bei dieser Ausführungsform dient die gesamte Fläche des Nährstoffübertragungselements 5 der Nährstoffübertragung zwischen den wenigstens zwei Bereichen der Urne 1.

Bei der Ausführungsform der erfindungsgemäßen Urne gemäß Figur 2a liegt das Nährstoffübertragungselement 5 unmittelbar auf der im ersten Bereich 7 befindlichen Asche auf. Die Bepflanzungsgrundlage wird anschließend unmittelbar auf das Nährstoffübertragungselement 5 aufgebracht. Wird bei dieser Ausführungsform der erfindungsgemäßen Urne die Pflanze gegossen, so transportiert das Wasser die in der Asche enthaltenen Nährstoffe durch das scheibenförmige Nährstoffübertragungselement hindurch in die Bepflanzungsgrundlage, wo sie von der Pflanze aufgenommen werden können. Das Nährstoffübertragungselement ist so ausgestaltet, dass nur die Nährstoffe übertragen werden, die Asche selbst aber nicht in Kontakt mit der Bepflanzungsgrundlage kommt.

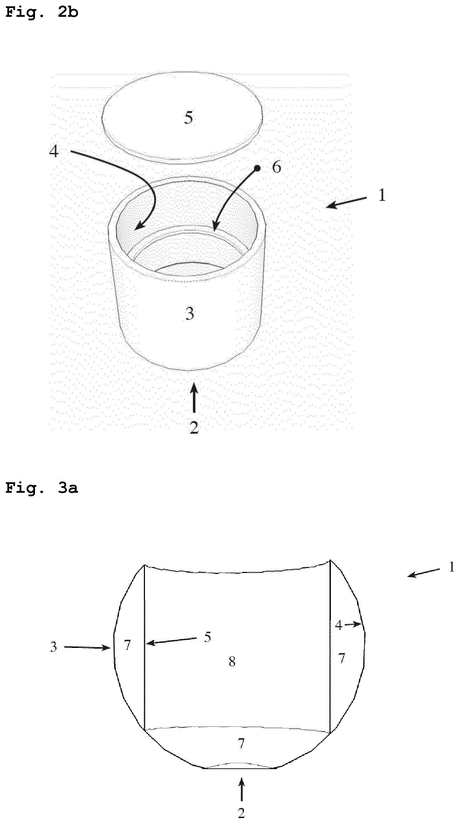

Figur 2b zeigt eine besonders vorteilhafte Ausführungsform einer Urne in der Ausführungsform gemäß Figur 2a. Bei dieser Ausführungsform verläuft auf der Innenseite der Außenwand der Urne 3 eine Nut 6 radial in einem vorbestimmten Abstand von der Grundfläche 2 der Urne. Die Nut 6 dient der Auflage und Fixierung des Nährstoffübertragungselements 5, wenn dieses in den Innenraum 4 der Urne 1 eingelegt wird. Das Vorhandensein einer Nut 6 hat einerseits den Vorteil, dass das Nährstoffübertragungselement 5 parallel und in einem vorgegebenen Abstand zur Urnengrundfläche 2 fixiert werden kann. Ein weiterer Vorteil dieser Ausführungsform besteht darin, dass das Nährstoffübertragungselement 5 einen geringfügig kleineren Durchmesser aufweisen kann als der Innendurchmesser der Urne und damit die Einbringung des Nährstoffübertragungselements 5 in den Innenraum der Urne 4 erleichtert wird.

Ein Nachteil der Ausführungsform gemäß Figur 2b besteht allerdings darin, dass die in den ersten Bereich 7 eingebrachte Asche möglicherweise nicht die Füllhöhe bis zur Nut 6 erreicht und damit ein Hohlraum zwischen der Asche und dem auf der Nut 6 aufliegenden Nährstoffübertragungselement entstehen kann. Bei Vorhandensein eines solchen Hohlraums wird der Nährstofftransport zwischen der Asche und dem Nährstoffübertragungselement 5 erschwert. Dieser Nachteil kann durch eine erhöhte Zufuhr von Wasser beseitigt werden. Einige Pflanzenarten reagieren jedoch auf eine erhöhte Wasserzufuhr empfindlich und gehen ein.

Bei einer besonders vorteilhaften Ausführungsform der erfindungsgemäßen Urne gemäß Figur 3a wird daher wenigstens ein weiteres Nährstoffübertragungselement als Dochtelement 9 an das Nährstoffübertragungselement 5 angeordnet.

Figur 3a zeigt eine besondere Ausführungsform der erfindungsgemäßen Ausführungsform, bei der das Nährstoffübertragungselement den zweiten Bereich 8 der Urne begrenzt und von dem ersten Bereich 7 der Urne abgrenzt.

Bei der Ausführungsform gemäß Figur 3a ist die Urne 1 vorzugsweise im wesentlichen kugelförmig ausgestaltet und nimmt in ihrem Innenraum das Nährstoffübertragungselement 5 auf, das vorzugsweise hohl und zylinderförmig oder quaderförmig ausgebildet und zur Oberseite der Urne 1 offen ist, wobei die Seitenwände des Nährstoffübertragungselements bündig mit der Innenseite der Außenwand 3 der Urne 1 festverbindbar abschließen. Der erste Bereich 7 der Urne wird durch den so gebildeten Hohlraum zwischen Außenwand 3 der Urne 1 und dem Nährstoffübertragungselement 5 im Innenraum 4 der Urne 1 gebildet.

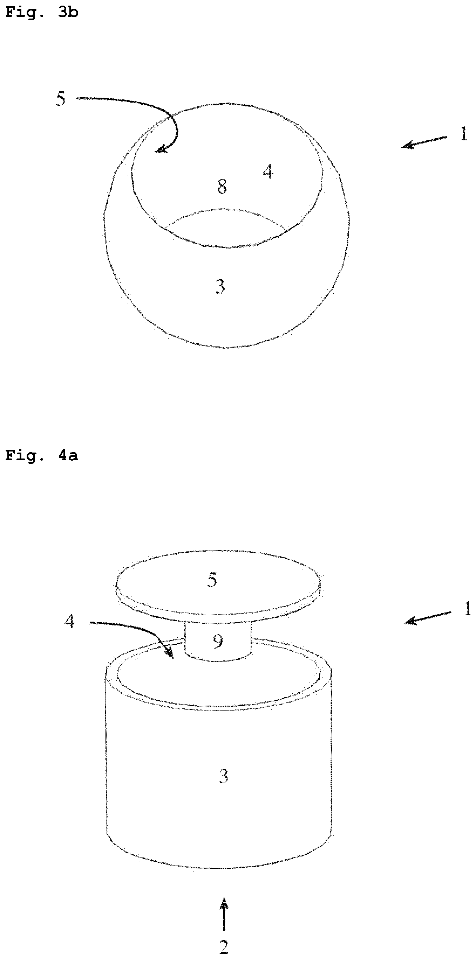

Figur 3b zeigt eine Außenansicht der Urne gemäß Figur 3a.

Figur 4a zeigt hierzu eine vorzugsweise Ausführungsform der erfindungsgemäßen Urne 1 mit Außenwand 3. Das Nährstoffübertragungselement 5 weist ein Dochtelement 9 auf, das an der dem ersten Bereich 7 zugewandten Seite des Nährstoffübertragungselements 5 angeordnet ist.

In einer weiteren besonders vorteilhaften Ausführungsform ist das Dochtelement 9 mit dem Nährstoffübertragungselement 5 fest verbindbar.

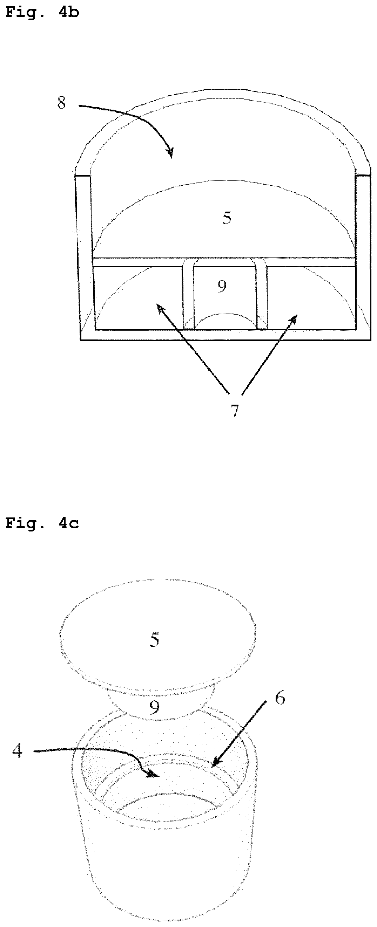

Figur 4b zeigt einen Querschnitt der Ausführungsform gemäß Figur 4a mit eingebrachtem Nährstoffübertragungselement 5. Hierdurch werden die beiden Bereiche 7 und 8 gebildet. Ein besonderer Vorteil dieser Ausführungsform besteht darin, dass durch die Höhe des Dochtelements 9 der Abstand des Nährstoffübertragungselements 5 von der Urnengrundfläche 2 bestimmt werden kann. Es bedarf dann nicht zwingend der Nut 6, um das Nährstoffübertragungselement 5 in einem vorbestimmten Abstand von der Urnengrundfläche 2 zu fixieren. Ein weiterer Vorteil dieser Ausführungsform besteht darin, dass unabhängig von der Füllhöhe der im ersten Bereich 7 eingebrachten Asche eine Nährstoffübertragung in den zweiten Bereich 8 durch das Dochtelement 9 gewährleistet wird, das sich in die Asche hinein erstreckt.

Figur 4c zeigt eine weitere vorzugsweise Ausführungsform der erfindungsgemäßen Urne, in der ein scheibenförmiges Nährstoffübertragungselement 5 mit einem Dochtelement 9 fest verbindbar ist und das Nährstoffübertragungselement 5 mittels einer Nut 6, die radial in einem vorbestimmten Abstand von der Grundfläche 2 der Urne auf der Innenseite der Außenwand der Urne 3 verläuft, aufliegt und fixiert werden kann.

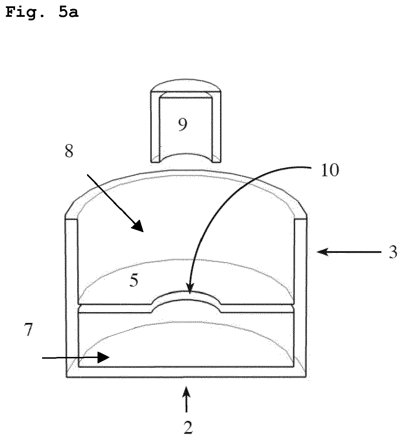

Figur 5a zeigt eine weitere vorteilhafte Ausführungsform der Urne 1, bei der das Nährstoffübertragungselement 5 wenigstens eine Öffnung 10 aufweist. Bei dieser Ausführungsform ist das Nährstoffübertragungselement 5 fest mit dem Innenraum 4 der Außenwand 3 der Urne an einer bestimmten Höhe verbindbar. In einer weiteren Ausführungsform der erfindungsgemäßen Urne wird das Nährstoffübertragungselement 5 erst nach einer Befüllung des ersten Bereichs 7 mit Asche in die Urne eingebracht wird. Die Öffnung 10 des wenigstens einen Nährstoffübertragungselements 5 ist so ausgestaltet, dass sie ein Dochtelement 9 fest aufnehmen kann, wobei das Dochtelement 9 nach Einbringung in die Öffnung 10 sowohl in den ersten Bereich 7 als auch in den zweiten Bereich 8 hineinragt. Das Nährstoffübertragungselement 5 und das darin eingebrachte Dochtelement 9 grenzen bei dieser Ausführungsform den ersten Bereich 7 von dem zweiten Bereich 8 vollständig ab.

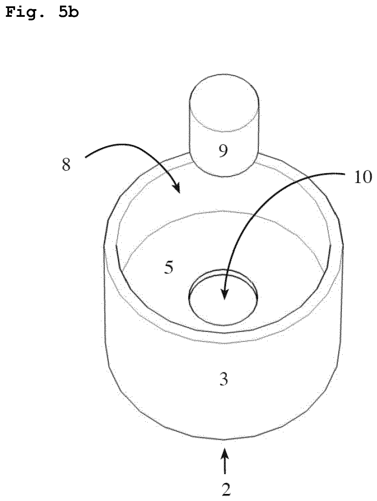

Figur 5b zeigt eine Draufsicht auf das Ausführungsform gemäß Figur 5a, bei der das Nährstoffübertragungselement 5 mit einer Öffnung 10 in die Urne 1 eingebracht ist.

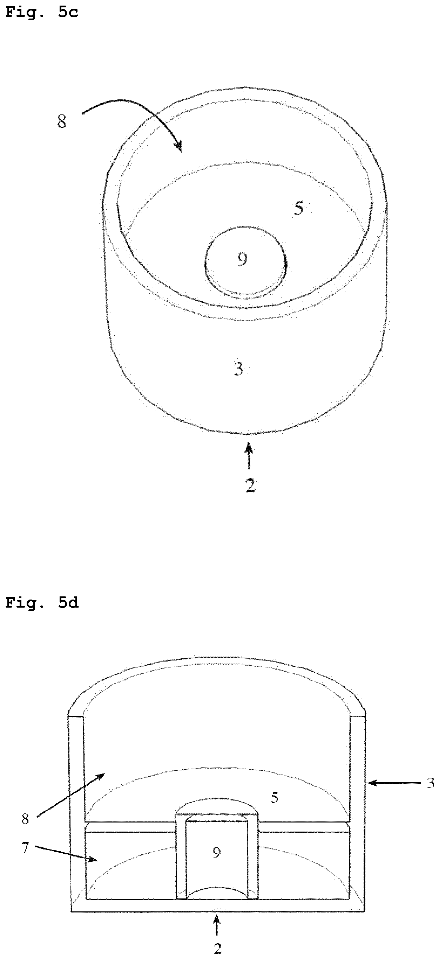

Figur 5c zeigt eine Draufsicht auf die Urne gemäß Figur 5a und das in das Nährstoffübertragungselement 5 fest eingebrachte Dochtelement 9.

Figur 5d zeigt einen Querschnitt des Ausführungsform gemäß Figur 5a, bei dem das Dochtelement 9 in das Nährstoffübertragungselement 5 eingebracht ist.

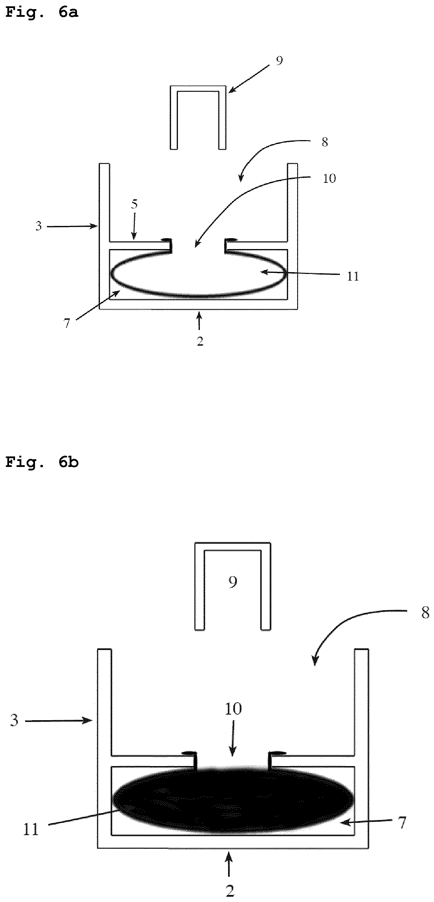

Figur 6a zeigt eine Ausführungsform der erfindungsgemäßen Urne, bei der die Asche nicht unmittelbar in den ersten Bereich 7 eingebracht wird, sondern in der ein Aschebehältnis 11, das zur Aufnahme der Asche dient, in den ersten Bereich 7 eingebracht wird. Dies hat den Vorteil, dass bei einer Beschädigung oder einem Zerbrechen der Urne die Asche im Aschebehältnis 11 verbleibt. Das Aschebehältnis 11 besteht daher vorteilhafter Weise aus einem unlöslichen Stoff oder aus einem anderen bruchsicheren Material, das ein Eindringen der Feuchtigkeit erlaubt und die gelösten Nährstoffe in den ersten Bereich (7) dringen lässt.

Figur 6a zeigt das unbefüllte Aschebehältnis 11 im ersten Bereich 7 der Urne, ohne dass das Dochtelement 9 in das Nährstoffübertragungselement 5 eingebracht ist.

Figur 6b zeigt ein befülltes Aschebehältnis 11 im ersten Bereich 7 der Urne 1.

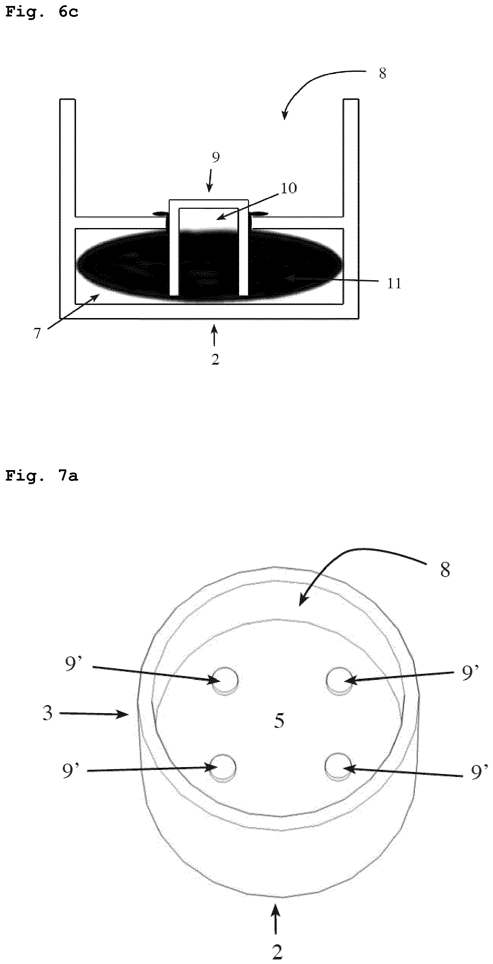

Figur 6c zeigt das in das Nährstoffübertragungselement 5 eingebrachte Dochtelement 9 und das Aschebehältnis 11.

Die Figur 7a zeigt die erfindungsgemäße Urne 1, bei der mehrere Dochtelemente 9 in das Nährstoffübertragungselement (5) eingebracht sind. Dies hat den Vorteil einer verbesserten Nährstoffübertragung.

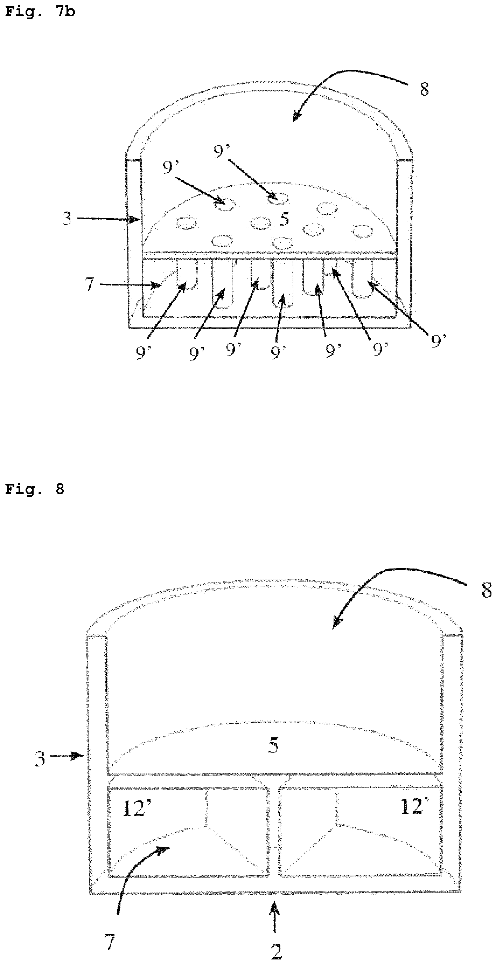

Figur 7b zeigt einen Querschnitt der erfindungsgemäßen Urne mit mehreren Dochtelementen 9, die in das Nährstoffübertragungselement 5 eingebracht sind.

Eine besonders vorteilhafte Ausführungsform der erfindungsgemäßen Urne sieht vor, dass die Asche mehrerer Personen oder Tiere in wenigstens zwei Teilbereichen innerhalb des ersten Bereichs 7 aufgenommen werden kann. Figur 8 zeigt den Querschnitt einer erfindungsgemäßen Urne, bei der der erste Bereich 7 wenigsten zwei Teilbereiche 12 aufweist.

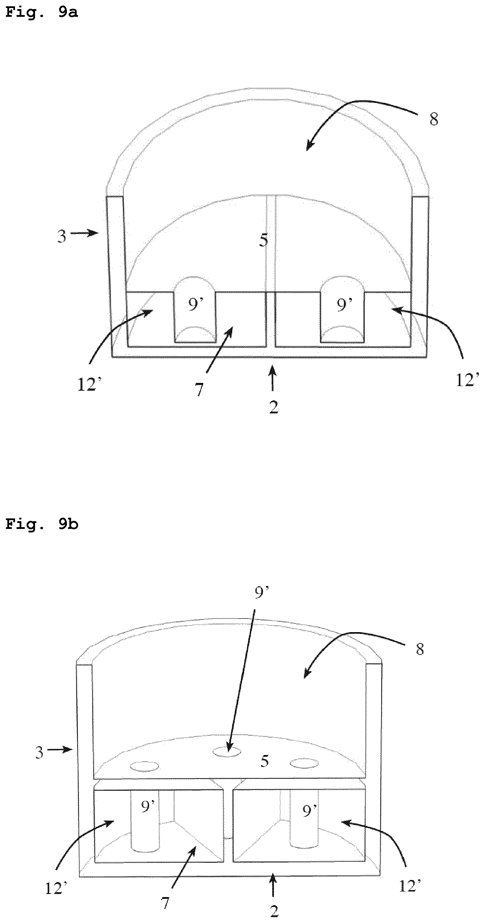

Figur 9a zeigt beispielhafte Ausführungsform der erfindungsgemäßen Urne mit zwei Teilbereichen 12' und 12" mit jeweils einem Dochtelement.

Figur 9b zeigt den Querschnitt einer erfindungsgemäßen Urne mit sechs Teilbereichen, wobei jedem Teilbereich wenigstens ein eigenes Dochtelement 9 zugeordnet ist.

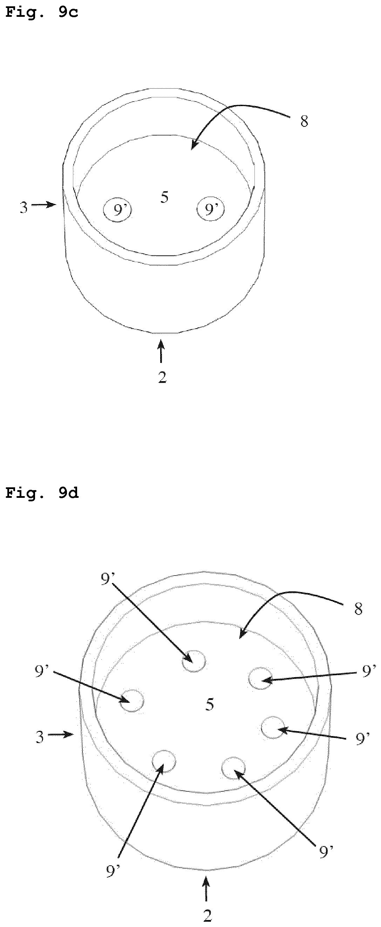

Figur 9c zeigt eine Draufsicht der Urne nach Figur 9a.

Figur 9d zeigt eine Draufsicht der Urne gemäß Figur 9b.

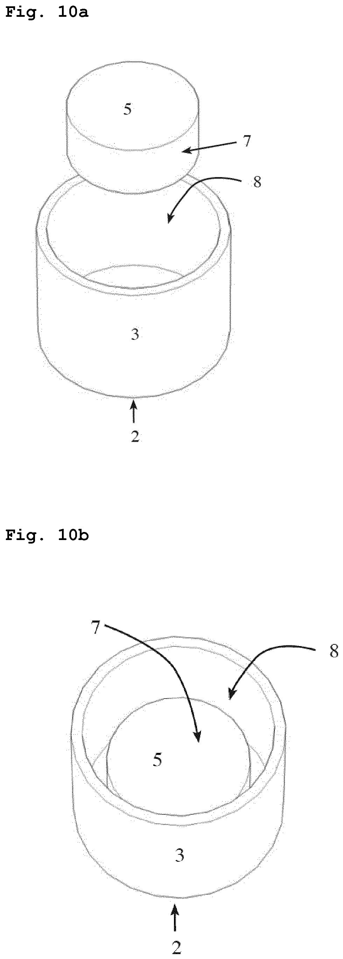

Figur 10a zeigt eine erfindungsgemäße Urne mit einem Nährstoffübertragungselement 5, das den ersten Bereich 7 der Urne bildet und begrenzt. Das Nährstoffübertragungselement 5 wird vollständig in den Innenraum 4 der Urne 1 eingebracht. Anschließend wird der Innenraum 4 der Urne 1 mit der Bepflanzungsgrundlage (Erde, Granulat etc.) aufgefüllt. Bei dieser Ausführungsform umfasst der zweite Bereich 8 der Urne 1 den Innenraum 4 der Urne 1.

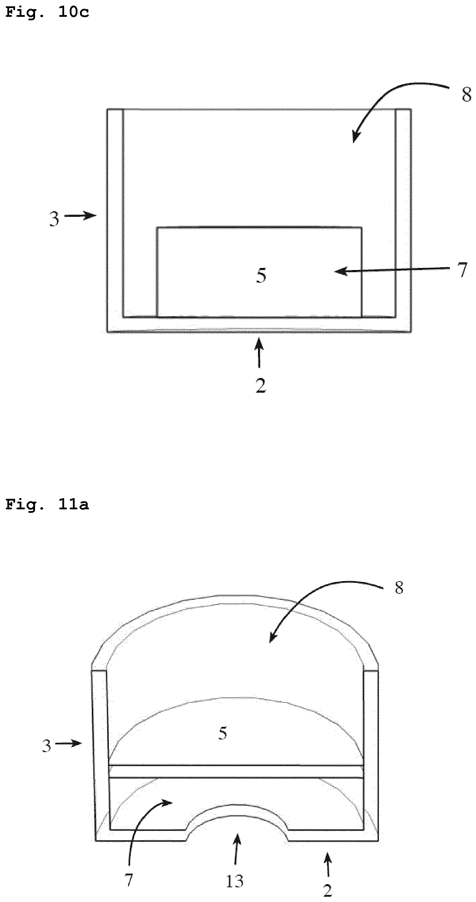

Figur 10b zeigt eine Draufsicht der erfindungsgemäßen Urne gemäß Figur 10a, wobei das Nährstoffübertragungselement 5 in den Innenraum 4 eingebracht wird. Figur 10c zeigt den Querschnitt der erfindungsgemäßen Urne mit einem eingebrachte Nährstoffübertragungselement 5.

Figur 11a zeigt eine besondere Ausführungsform der erfindungsgemäßen Urne, bei der der erste Bereich 7 der Urne 1 von der Urnengrundfläche 2 aus mit Asche befüllbar ist. Bei dieser Ausführungsform findet sich eine verschließbare Öffnung 13 in der Urnengrundfläche 2 durch die die Asche in den unteren Bereich 7 der Urne 1 eingebracht.

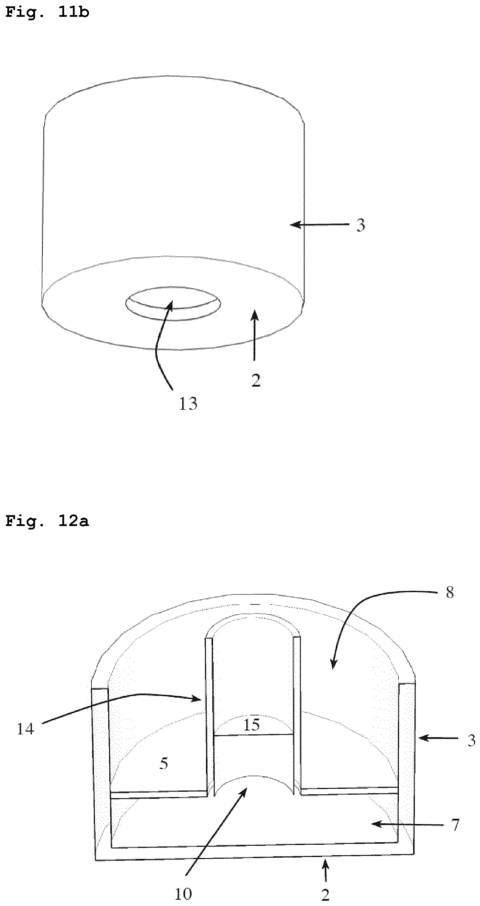

Figur 11b zeigt die Draufsicht einer Urne gemäß Figur 10a.

Figur 12a zeigt eine weitere vorteilhafte Ausführungsform der erfindungsgemäßen Urne gemäß Figur 5a, die ein Bewässerungselement 14 aufweist.

Das Bewässerungselement ist vorzugsweise so ausgebildet, dass er sich der Länge nach bis zum oberen Ende des Innenbereichs (4) der Urne erstreckt. So wird verhindert, dass die Bepflanzungsgrundlage von dem zweiten Bereich 8 der Urne in den ersten Bereich 7 der Urne gelangt.

Bei einer besonders vorteilhaften Ausführungsform der Urne gemäß Figur 12a weist ein scheibenförmiges Nährstoffübertragungselement 5, das zwischen dem ersten Bereich (7) und dem zweiten Bereich (8) angeordnet ist, wenigstens eine Öffnung 10 mit einem Bewässerungselement 14 auf. Das Bewässerungselement 14 kann seinerseits als Nährstoffübertragungselement ausgestaltet sein.

Das wenigstens eine Bewässerungselement 14 kann mit wenigstens einem weiteren des Nährstoffübertragungselement 5 verbunden sein.

Bei der dargestellten Ausführungsform ist das wenigstens eine Bewässerungselement 14 zylindrisch ausgestaltet. Das wenigstens eine Bewässerungselement 14 kann jedoch auch jede andere denkbare geometrische Form aufweisen, die geeignet ist, die Öffnung des Nährstoffübertragungselements 10 bzw. den ersten Bereich 7 der Urne 1 von dem zweiten Bereich 8 der Urne 1 abzugrenzen.

Das Gießwasser für die Pflanze wird bei dieser Ausführungsform direkt in den ersten Bereich 7 der Urne eingebracht. Dort reichert sich das Wasser mit Nährstoffen an, die über wenigstens ein Nährstoffübertragungselement 5, 14 in die Erde im zweiten Bereich 8 der Urne 1 transportiert werden.

Ein Vorteil dieser Ausführungsform liegt darin, dass diese Urne sehr wartungsarm ist. Es reicht, wenn das Gießwasser alle paar Tage nachgefüllt wird. Die Gefahr, dass die Pflanze eingeht, wenn einige Tage lang kein Gießwasser zugeführt wird, ist bei diesem System geringer.

Vorzugsweise ist die Öffnung des Nährstoffübertragungselements 10 oder das Bewässerungselement 14 bei dieser Ausführungsform der Urne 1 verschließbar, beispielsweise mit einem Verschluss 15. Der Verschluss kann jede denkbare geometrische Form aufweisen, beispielsweise scheibenförmig, kugelförmig, trichterförmig. Der Verschluss dient dazu, eine räumliche Trennung zwischen dem ersten Bereich 7 der Urne 1 und dem zweiten Bereich 8 der Urne 1 bzw. dem Außenraum der Urne 1 zu bewirken. Der Verschluss 15 kann wasserdurchlässig oder zum Gießen der Pflanze aufmachbar und wiederverschließbar ausgestaltet sein. Vorzugsweise handelt es sich bei dem Verschluss 15 um eine wasserdurchlässige Membran, die verhindert, dass die Asche nach außen dringt aber gleichzeitig das Zuführen von Gießwasser ermöglicht. Ist der der Verschluss 15 im Bewässerungselement 14 angeordnet, ist dieses so ausgestaltet, dass ein Eindringen des Verschlusses 15 in den ersten Bereich 7 der Urne verhindert wird, beispielsweise durch eine Verengung des Bewässerungselements an einer vorgegebenen Stelle.

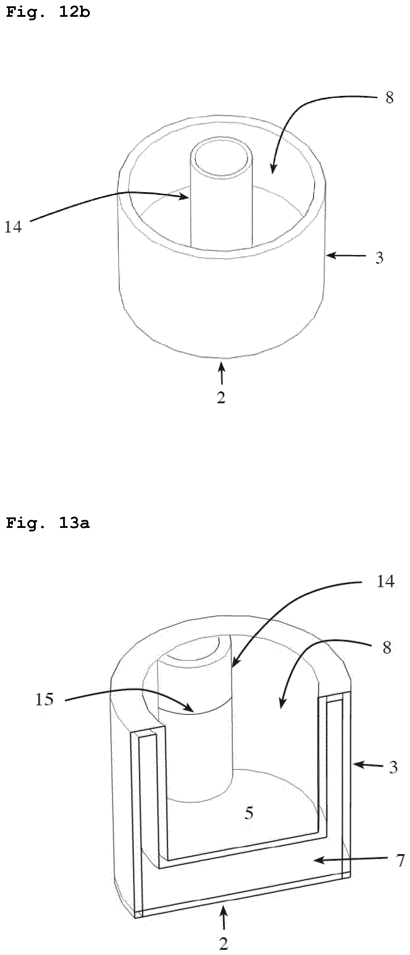

Figur 12b zeigt eine Außenansicht einer Urne gemäß Figur 12a. Figur 13a zeigt eine besondere Ausführungsform einer Urne, bei der der erste Bereich 7 der Urne durch einen Hohlraum zwischen der Außenwand 3 der Urne 1 und dem Innenraum 4 der Urne 1 gebildet wird.

Vorzugsweise bildet hier wenigstens ein Nährstoffübertragungselement 5 eine Innenseite der Außenwand 3 der Urne und grenzt so den ersten Bereich 7 von dem zweiten Bereich 8 der Urne 1 ab. Bei dieser vorzugsweisen Gestaltung bildet der zweite Bereich 8 den Innenraum 4 der Urne 1.

Bei der Ausführungsform der erfindungsgemäßen Urne gemäß Figur 13a kann Gießwasser beispielsweise über ein Bewässerungselement 14 in den ersten Bereich 7 der Urne 1 eingebracht werden.

Wird Wasser in den ersten Bereich 7 einbracht, werden Nährstoffe aus der Asche gelöst und durch wenigstens ein Nährstoffübertragungselement 5, 14 in den zweiten Bereich 8 im Innenraum der Urne 4 transportiert.

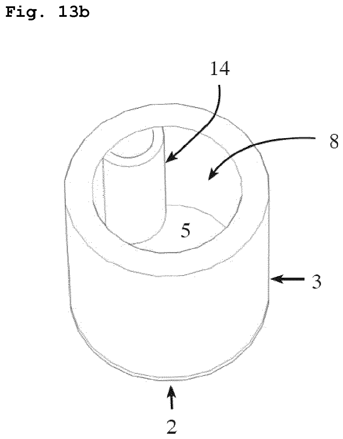

Figur 13b zeigt eine Draufsicht der Urne gemäß Figur 13a.

### Bezugszeichen

- 1: Urne
- 2: Urnengrundfläche
- 3: Außenwand der Urne
- 4: Innenraum der Urne
- 5: Nährstoffübertragungselement
- 6: Nut
- 7: erster Bereich
- 8: zweiter Bereich
- 9: Dochtelement
- 10: Öffnung im Nährstoffübertragungselement
- 11: Aschebehältnis
- 12: Teilbereich
- 13: Öffnung in der Urnengrundfläche
- 14: Bewässerungselement
- 15: Verschluss

## Patentansprüche

1. Urne umfassend wenigstens zwei getrennte Bereiche (7; 8) und wenigstens ein Nährstoffübertragungselement (5), wobei wenigstens ein erster Bereich (7) zur Aufnahme von Asche, insbesondere Kremationsasche, dient, wenigstens ein zweiter Bereich (8) zur Aufnahme einer Bepflanzungsgrundlage dient und mittels des wenigstens einen Nährstoffübertragungselements (5) Nährstoffe aus dem ersten Bereich (7) in den zweiten Bereich (8) gelangen können, **dadurch gekennzeichnet, dass** wenigstens ein Nährstoffübertragungselement (5) ein Dochtelement (9) ist, das sich in wenigstens einen ersten Bereich (7) der Urne (1) erstreckt.

2. Urne nach Anspruch 1, **dadurch gekennzeichnet, dass** der erste Bereich der Urne (7) wenigstens zwei Teilbereiche (12, 12') aufweist.

3. Urne nach Anspruch 1 oder nach Anspruch 2, **dadurch gekennzeichnet dass** wenigstens ein Nährstoffübertragungselement (5) scheibenförmig ausgestaltet ist.

4. Urne nach einem oder mehreren der vorhergehenden Ansprüche, **dadurch gekennzeichnet, dass** wenigstens ein Nährstoffübertragungselement mit der Innenseite der Außenwand der Urne (3) fest verbunden ist.

5. Urne nach einem oder mehreren der vorhergehenden Ansprüche, **dadurch gekennzeichnet, dass** die Asche durch wenigstens eine Öffnung (13) in der Urnengrundfläche (2) in den ersten Bereich (7) einbringbar ist.

6. Urne nach einem oder mehreren der vorhergehenden Ansprüche, **dadurch gekennzeichnet, dass** wenigstens ein Nährstoffübertragungselement (5) ein Bewässerungselement (14) aufweist, der mit dem wenigstens einen ersten Bereich (7) der Urne verbunden ist.

7. Urne nach einem oder mehreren der vorhergehenden Ansprüche, **dadurch gekennzeichnet, dass** wenigstens ein erster Bereich (7) durch einen Hohlraum zwischen der Innenseite der Außenwand (3) der Urne (1) und dem zweiten Bereich (8) der Urne (1) gebildet wird und von wenigstens einem Nährstoffübertragungselement (5; 14) begrenzt wird.

8. Urne nach Anspruch 1, **dadurch gekennzeichnet, dass** wenigstens ein Nährstoffübertragungselement (5) wenigstens einen ersten Bereich (7) umschließt und in einen zweiten Bereich (8) im Innenraum (4) der Urne einbringbar ist.

9. Urne nach einem oder mehreren der vorhergehenden Ansprüche, **dadurch gekennzeichnet, dass** die Asche in ein Aschebehältnis (11) in dem ersten Bereich (7) der Urne einbringbar ist.

## Claims

1. An urn comprising at least two separate sections (7; 8) and at least one nutrient transmission element (5), wherein at least one first section (7) serves to receive ashes, in particular cremation ashes, at least one second section (8) serves to receive a planting base and wherein nutrients can pass by means of the at least one nutrient transmission element (5) from the first section (7) into the second section (8), **characterized in that** at least one nutrient transmission element (5) is a wicking element (9) that extends into at least one first section (7) of the urn (1).

2. Urn according to claim 1, **characterized in that** the first section of the urn (7) has at least two partial sections (12, 12').

3. Urn according to claim 1 or claim 2, **characterized in that** at least one nutrient transmission element (5) is disc-shaped.

4. Urn according to one or several of the preceding claims, **characterized in that** at least one nutrient transmission element is fixedly connected to the inner side of the exterior wall of the urn (3).

5. Urn according to one or several of the preceding claims, **characterized in that** the ashes can be placed into the first section (7) through at least one opening (13) in the bottom area (2) of the urn.

6. Urn according to one or several of the preceding claims, **characterized in that** at least one nutrient transmission element (5) has an irrigating element (14) which is connected to the at least one first section (7) of the urn.

7. Urn according to one or several of the preceding claims, **characterized in that** at least one first section (7) is formed by a cavity between the inner side of the exterior wall (3) of the urn (1) and the second section (8) of the urn (1) and is delimited by at least one nutrient transmission element (5; 14).

8. Urn according to claim 1, **characterized in that** at least one nutrient transmission element (5) surrounds at least one first section (7) and can be inserted into a second section (8) in the interior space (4) of the urn.

9. Urn according to one or several of the preceding claims, **characterized in that** the ashes can be placed into an ash container (11) in the first section (7) of the urn.

## Revendications

1. Urne comprenant au moins deux zones séparées (7 ; 8) et au moins un élément de transfert de nutriments (5), sachant qu'au moins une première zone (7) sert à recevoir des cendres, en particulier des cendres de crémation, qu'au moins une seconde zone (8) sert à recevoir une base de plantation et des nutriments peuvent parvenir de la première zone (7) dans la seconde zone (8) au moyen de l'au moins un élément de transfert de nutriments (5), **caractérisée en ce qu'**un élément de transfert de nutriments (5) au moins est un élément mèche (9) qui s'étend dans au moins une première zone (7) de l'urne (1).

2. Urne selon la revendication 1, **caractérisée en ce que** la première zone de l'urne (7) présente au moins deux zones partielles (12, 12').

3. Urne selon la revendication 1 ou selon la revendication 2, **caractérisée en ce qu'**au moins un élément de transfert de nutriments (5) se présente sous la forme d'un disque.

4. Urne selon l'une ou plusieurs des revendications précédentes, **caractérisée en ce qu'**au moins un élément de transfert de nutriments est rigidement relié avec la face intérieure de la paroi extérieure de l'urne (3).

5. Urne selon l'une ou plusieurs des revendications précédentes, **caractérisée en ce que** la cendre peut être introduite dans la première zone (7) via au moins une ouverture (13) dans la surface de base (2) de l'urne.

6. Urne selon l'une ou plusieurs des revendications précédentes, **caractérisée en ce qu'**un élément de transfert de nutriments (5) au moins présente un élément d'irrigation (14) qui est relié avec l'au moins une première zone (7) de l'urne.

7. Urne selon l'une ou plusieurs des revendications précédentes, **caractérisée en ce qu'**au moins une première zone (7) est formée par une cavité entre la face intérieure de la paroi extérieure (3) de l'urne (1) et la seconde zone (8) de l'urne (1) et est limitée par au moins un élément de transfert de nutriments (5 ; 14).

8. Urne selon la revendication 1, **caractérisée en ce qu'**au moins un élément de transfert de nutriments (5) entoure au moins une première zone (7) et peut être introduit dans une seconde zone (8) dans l'espace intérieur (4) de l'urne.

9. Urne selon l'une ou plusieurs des revendications précédentes, **caractérisée en ce que** la cendre peut être introduite dans un conteneur à cendres (11) dans la première zone (7) de l'urne.
